# EUROPEAN PATENT SPECIFICATION

(11) **EP 2 435 486 B1**
(45) Date of publication and mention of the grant of the patent: **06.07.2016**
(21) Application number: 10725601.8
(22) Date of filing: 27.05.2010
(51) Int. Cl.: C08F 2/14, C08F 10/02, C08F 6/00

(54) **A PROCESS FOR THE PRODUCTION OF BIMODAL HDPE WITH WAX RECOVERY**
VERFAHREN ZUR HERSTELLUNG VON BIMODALEM HDPE
PROCÉDÉ POUR LA PRODUCTION DE HDPE BIMODAL

(30) Priority: 28.05.2009 EP 09007112
(43) Date of publication of application: 04.04.2012
(73) Proprietor: SAUDI BASIC INDUSTRIES CORPORATION (SABIC), Riyadh 11422 (SA)
(72) Inventor: HEUVEL, VAN DEN, Robert Wilhelm Heinrich, 6160 Ga Geleen (NL)
(74) Representative: Sabic Intellectual Property Group
(86) International application number: PCT/EP2010/003221
(87) International publication number: WO 2010/136202

(56) References cited:
- GB-A- 1 028 086
- US-A- 3 074 923
- US-A- 3 155 640
- US-B1- 6 204 345
- ALT F P; ET AL: "BIMODAL POLYETHYLENE - INTERPLAY OF CATALYST AND PROCESS" MACROMOLECULAR SYMPOSIA, WILEY VCH VERLAG, WEINHEIM, DE, no. 163, 1 January 2001 (2001-01-01), pages 135-143, XP001050880 ISSN: 1022-1360
- Fluor Company: "Environmental Impact Assessment for TASNEE Petrochemicals Ethylene and Polyethylene Projects TASNEE Petrochemicals Al-Jubail Saudi Arabia", , 1 December 2005 (2005-12-01), pages 1-62, XP55144854, Retrieved from the Internet: URL:http://www.agaportal.de/pdf/nachhaltig keit/eia/eia_saudiarabien_petroch.pdf [retrieved on 2014-10-07]

## Description

The present invention relates to a low pressure slurry process for the production of bimodal high density polyethylene comprising a polymerisation stage, a powder drying stage, an extrusion and pellet handling stage, a recycling stage and a wax removal unit.

The production processes for bimodal high density polyethylene (HDPE) are summarised at pages 16-20 of "PE 100 Pipe systems" (edited by Bromstrup; second edition, ISBN 3-8027-2728-2).

The production of bimodal high density polyethylene (HDPE) via a low pressure slurry process is described by Alt et al. in "Bimodal polyethylene-Interplay of catalyst and process" (Macromol.Symp. 2001, 163, 135-143). In a two stage cascade process the reactors may be fed continuously with a mixture of monomers, hydrogen, catalyst/co-catalyst and hexane recycled from the process. In the reactors, polymerisation of ethylene occurs as an exothermic reaction at pressures in the range between for example 0.5 MPa (5 bar) and 1 MPa (10 bar) and at temperatures in the range between for example 75 °C and 85 °C. The heat from the polymerisation reaction is removed by means of cooling water. The characteristics of the polyethylene are determined amongst others by the catalyst system and by the concentrations of catalyst, co monomer and hydrogen.

The concept of the two stage cascade process is elucidated at pages 137-138 by Alt et al. "Bimodal polyethylene-Interplay of catalyst and process" (Macromol.Symp. 2001, 163). The reactors are set up in cascade with different conditions in each reactor including a low hydrogen content in the second reactor. This allows for the production of HDPE with a bimodal molecular mass distribution and defined co monomer content in the polyethylene chains.

The polymer suspension or "slurry" flows from the reactors into a common post reactor. In this reactor the final polymerisation takes place, resulting in a conversion rate of more than 99% of the monomers used. The suspension then flows to a suspension receiver and the suspension leaving the receiver is separated in a decanter centrifuge. Next the solid part is fed to a fluidised bed dryer and the liquid part goes back to the reactors. In the dryer the last remaining hexane is stripped off and then recovered in the closed loop nitrogen system. The dried HDPE powder passes a sieve and is pneumatically conveyed by nitrogen to the extrusion section. From an intermediate storage bin the powder is dosed into a mixing screw together with proportionally controlled stabilisers and optional additives such as fillers and pigments. From here the mixture is fed to the extruder. The energy for the processing the material in the extruder is introduced by the main motor and speed and design of the screws. In the mixing section of the extruder the powder mixture is compressed, molten and homogenised. By means of a gear pump the melt is fed to an underwater pelletiser. The pellets are dried and pneumatically conveyed to homogenisation silos. A part of the hexane is evaporated. The heavy ends of this pre-distillation are fed to the wax removal unit. The overhead stream of the pre-distillation, for example wax-free hexane is distilled in the hexane column. Finally, the hexane is purified in adsorbers and fed back into the process. A wax-rich hexane flow, resulting from pre-distillation during the hexane purification process, is concentrated to polyethylene wax.

The liquid wax from the wax removal unit is a by-product of the polymerisation process. Methods for transporting the liquid wax to a remote location include for example the transport via truck loading, railcar or pipelines. The flame point of the wax obtained with the described process may be much lower than 170 °C. However, in order to be able to transport the liquid wax safe by a truck the flame point of the wax has to be preferably 170 °C or higher.

Another problem may be that in case the wax is solidified and stored in big bags the trapped hydrocarbons will escape to the atmosphere.

It is the object of the present invention to provide a process resulting in a polyethylene wax that can be stored and transported more safely.

The process according to the invention is characterised in that the wax from the wax removal unit is continuously introduced in a wax recovery unit in which steam is introduced and in which a reduced pressure which ranges between 0.01 and 0.05 MPa is created.

A heat carrier is present in the wax recovery unit. An example of a suitable heat carrier is steam.

Both steam and wax from the wax removal unit are introduced at the top of the wax recovery unit at a temperature ranging between for example 140 °C and 200 °C.

An advantage of the process according to the invention is the very low concentration of flammable substances in the polyethylene wax after the wax recovery unit. The use of the wax recovery unit after the wax removal unit results in polyethylene wax having a flame point higher than 170 °C. This high flame point results in a much safer transport of the wax.

Another advantage of the process according to the present invention is that the amount of residual (C₆-C₈ hydrocarbon) volatiles is substantially reduced. The amount residual (C₆-C₈) volatiles may range between 0 and 0.1 % by weight.

A further advantage directed to environmental requirements is the lower emission of hydrocarbon off-gases when handling the wax outside a drum or pipeline for example as solidified flakes or pellets.

Another advantage is the improved processability of the wax in the heavy ends section of a cracker.

The polyethylene wax obtained with the process according to the invention has a flame point ranging between 140 °C and 200 °C. More preferably the flame point ranges between 170 °C and 200 °C.

The melting point of the polyethylene wax obtained with the process according to the invention may range between 100 °C and 125 °C.

The density of the polyethylene wax obtained with the process according to the invention may range between 400 and 1000 kg/m³.

The selection of the dimensions of the vessel or drum to be applied as the wax recovery unit is dependent on amongst others the capacity of the polymer production stage and the residence time in the recovery unit required to achieve the lower residual volatiles concentration and the higher flame point of the wax.

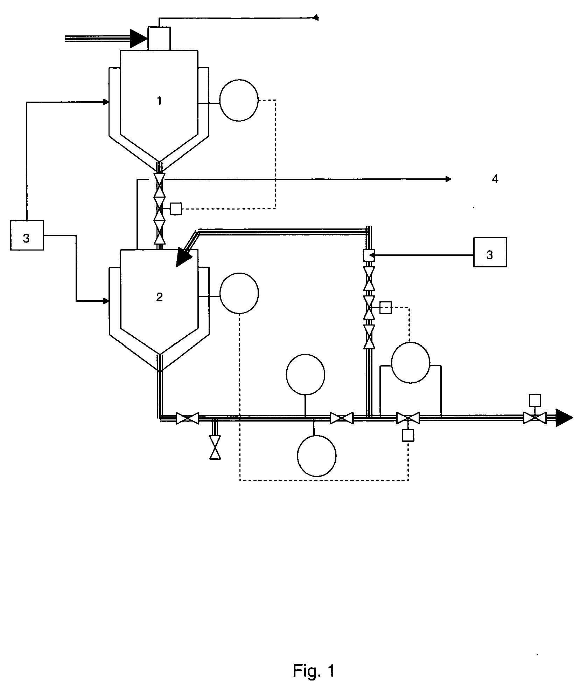

Fig. 1 illustrates schematically a preferred embodiment of the continuous process with the wax removal unit and the wax recovery unit according to the present invention. The wax obtained from the wax removal unit (1 in Fig. 1)'flows by gravity into the wax recovery unit (2 in Fig. 1) in which a reduced pressure between 0.01 and 0.05 MPa is created. The wax may be circulated over this unit by for example a gear pump connected to the bottom flange of the wax recovery unit. After the recovery unit an amount between for example 2 and 15 %, preferably between 8 and 12 %, may be send to the battery limit as the end product purified wax. The rest of the flow may be recirculated to the wax recovery unit.

Steam (3 in Fig. 1) is injected into the wax line before entering the wax recovery, unit. Preferably the steam is medium pressure steam.

Both steam (3 in Fig. 1) and wax from the wax removal unit are introduced at the top of the wax recovery unit at a temperature ranging between for example 150 °C and 190 °C. The liquid wax/steam mixture flashes when introduced into the recovery unit thus increasing the surface for evaporation. The steam introduces additional heat and has a stripping effect resulting in an enhanced evaporation.

The wax recovery unit is operated at such level that the desired residence time is achieved while creating sufficient free space for the flashing liquid. The ensuing vapours of steam and hydrocarbons are transported to a vacuum package (4 in Fig. 1) which is connected to the top of the wax recovery unit. The wax recovery unit is heated with steam, preferably medium pressure steam, to enhance degassing and to keep the wax liquid. If desired a nitrogen injection into the bottom part of the vessel may further enhance the degassing. Fig. 1 also comprises control techniques for an optimal vessel control. Examples of suitable control techniques are for example a flow controller, a pressure controller and a level controller.

US 3155640 discloses a process whereby the quantity of low molecular weight and atactic polymer in the final olefin polymer can be accurately controlled. According to the examples of US 3155640 this process is preferably applied to polypropylene. The process involves as main feature treating the polymerisation reactor product with a controlled amount of low molecular weight alcohol such as methanol for substantially complete precipitation of the main product and a controlled partial precipitation of the waxy polymer fraction. The temperature in the polymer precipitator ranges between about 50 °C and 90 °C. Another important feature is the use of the same alcohol stream for washing and precipitating both polymer product fractions. US 3155640 teaches how to prevent waxy polymer precipitation with main product during the filtration of waxy polymer. Preferably the final waxy polymer filter cake is treated via a batch drying process at relatively low temperatures. US 3155640 does not disclose a low pressure slurry process for the production of bimodal high density polyethylene comprising a polymerisation stage, a powder drying stage, an extrusion and pellet handling stage, a recycling stage and a wax removal unit. The process according to the present invention does not involve the treatment of the polymerisation reactor product with a controlled amount of low molecular weight alcohol at a temperature between 50 °C and 90 °C for precipitation of the main product and a controlled partial precipitation of the waxy polymer fraction. US 3155640 further does not disclose that wax from a wax removal unit is continuously introduced in a wax recovery unit.

GB 1028086 discloses a process for the purification of polyethylene waxes resulting from a high pressure polymerisation process. It is the object of GB 1028086 to provide a purification process to separate wax from the high pressure polymerisation process and to remove impurities such as high pressure compressor lubricants. A purification process in a high pressure polymerisation process is different from a purification process in the low pressure slurry process for the production of bimodal high density polyethylene. The discontinuous process according to GB 1028086 is performed in a closed vessel under a protective gas atmosphere.

GB 1028086 does not disclose that wax from a wax removal unit is continuously introduced in a wax recovery unit.

The polyethylene wax obtained by the process according to the present invention may be applied in a large number of technical fields for example printing inks, paints and coatings, additive and pigment master batches, plastics processing, corrosion protection and polishes.

## Claims

1. A low pressure slurry process for the production of bimodal high density polyethylene comprising a polymerisation stage, a powder drying stage, an extrusion and pellet handling stage, recycling stages and a wax removal unit **characterised in that** wax from the wax removal unit is continuously introduced in a wax recovery unit in which steam is introduced and in which a reduced pressure which ranges between 0.01 and 0.05 MPa is created.

2. A process according to Claim 1 **characterised in that** steam and wax from the wax removal unit are introduced at the top of the wax recovery unit at a temperature ranging between 140 °C and 200 °C.

## Patentansprüche

1. Niederdruck-Suspensionsverfahren zur Herstellung von bimodalem Polyethylen hoher Dichte mit einer Polymerisationsstufe, einer Pulvertrocknungsstufe, einer Extrusions- und Granulathandhabungsstufe, Rezyklierungsstufen und einer Wachsentfernungseinheit, **dadurch gekennzeichnet, dass** Wachs aus der Wachsentfernungseinheit kontinuierlich in eine Wachsrückgewinnungseinheit eingetragen wird, in die Dampf eingetragen wird und in der ein verminderter Druck, der im Bereich zwischen 0,01 und 0,05 MPa liegt, erzeugt wird.

2. Verfahren nach Anspruch 1, **dadurch gekennzeichnet, dass** Dampf und Wachs aus der Wachsentfernungseinheit am Kopf der Wachsrückgewinnungseinheit bei einer Temperatur im Bereich zwischen 140°C und 200°C eingetragen werden.

## Revendications

1. Procédé en suspension à basse pression pour la production de polyéthylène haute densité bimodal, comprenant une étape de polymérisation, une étape de séchage à l'état pulvérulent, une étape d'extrusion et de manipulation de granulés, des étapes de recyclage et une unité d'élimination de cire, **caractérisé en ce que** la cire provenant de l'unité d'élimination de cire est introduite en continu dans une unité de récupération de cire dans laquelle est introduite de la vapeur et dans laquelle est établie une pression réduite allant de 0,01 à 0,05 MPa.

2. Procédé selon la revendication 1, **caractérisé en ce que** la vapeur et la cire provenant de l'unité d'élimination de cire sont introduites au niveau de la partie supérieure de l'unité de récupération de cire à une température allant de 140 °C à 200 °C.
